# EUROPEAN PATENT SPECIFICATION

(11) **EP 0 907 398 B1**
(45) Date of publication and mention of the grant of the patent: **24.07.2002**
(21) Application number: 97921971.4
(22) Date of filing: 14.05.1997
(51) Int. Cl.: B01D 39/18, B01D 39/08, B01D 25/26, B01J 20/24

(54) **LIQUID AND GAS PURIFICATION AND FILTRATION**
REINIGUNG UND FILTRATION VON FLÜSSIGKEIT UND GAS
PURIFICATION ET FILTRAGE DE LIQUIDES ET DE GAZ

(30) Priority: 16.05.1996 GB 9610215
(43) Date of publication of application: 14.04.1999
(73) Proprietor: Axholme Resources Limited, Oakham, Rutland LE15 7QS (GB)
(72) Inventor: HAYNS, Andrew, Bickford, Oakham, Rutland LE15 7QS (GB)
(74) Representative: Earnshaw, Geoffrey Mark
(86) International application number: GB9701319
(87) International publication number: WO9743028

(56) References cited:
- WO-A-91/08037
- DE-A- 2 358 808
- US-A- 3 647 084
- US-A- 4 018 679
- US-A- 5 156 686

## Description

The present invention relates to a filter material for removal of organic and other pollutants from liquids and gases to filter columns, filter cartridges, filter pods and filter methods utilizing this filter material.

A number of strategies have been developed in the petrochemical industry for dealing with problems such as oil spillage and leakage, particularly at sea. Some methods, for example the use of detergents, simply aim to disperse the oil spillage as quickly as possible before too much damage has been done. It is, however, preferable to remove the oil from the water without allowing it to disperse, since there are many toxic components in the oil which may cause harm to the environment. It is known to provide a granular material based on cellulose, which has oil-absorbing properties, the material being in a form suitable for sprinkling onto an oil spillage. Once the oil has been absorbed, the material is gathered up and may be incinerated.

Oil spillages are not the only environmental problem faced by the petrochemical industry. There are many situations where it is desirable to remove components including organic pollutants (such as hydrocarbons) and heavy metal contaminants from produced water and water run-off before this water is released as effluent.

It is also desirable to remove such pollutants from liquids other than water and also from gases (e.g. air).

According to the present invention, there is provided a filter material comprising a sheet-like matrix in which is dispersed a granular formulation of a material comprising a base formed substantially of cellulose fibres onto which is adsorbed a composition comprising one or more aliphatic carboxylic acids having hydrocarbon chains consisting of 8 to 20 carbon atoms.

In preferred embodiments, the hydrocarbon chains of the one or more carboxylic acids consist of 10 to 18 carbon atoms. Particularly effective carboxylic acids have been found to include stearic acid CH₃(CH₂)₁₆COOH and palmitic acid CH₃(CH₂)₁₄COOH.

A method of producing the filter material comprises mixing one or more cellulosic materials together with a powdered formulation of the one or more carboxylic acids.

The granular material may be formed by mixing together one or more cellulosic materials, for example virgin pulp and wood chips, together with the one or more carboxylic acids in powder form and, optionally, latex. The mixing is preferably undertaken in a hammer mill, in which heat and friction assist the process whereby the carboxylic acid becomes adsorbed onto the cellulose fibres. It is thought that the carboxylic acids are adsorbed onto the surface of the cellulose fibres by way of the carboxyl -COOH functional group, either through hydrogen bonding or through the formation of cellulose esters containing an -O-CO-R group formed with the hydroxyl -OH groups on the cellulose rings. However the carboxylic acids are bonded to the cellulose fibres, the result is that the filter material of the present invention comprises cellulose fibres from which project hydrophobic hydrocarbon chains. When the material is applied to a mixture of water and hydrocarbon pollutants, the hydrophobic hydrocarbon tails of the carboxylic acid residues serve to attract the hydrocarbon pollutants to the material and to repel water, thereby providing the required separation. The material, incorporating the hydrocarbon pollutants, can then be gathered up and used as a fuelstock.

The sheet-like matrix may be fabricated from a number of materials, including non-woven fibrous materials, open-cell foam materials or a cotton or viscose gauze. The unloaded matrix advantageously has a density not greater than 0.25gcm⁻³, and preferably from 0.01 to 0.18gcm⁻³. A particularly preferred matrix has a thickness of around 3mm and a density in the region of 0.1gcm⁻³. The granular formulation of the material may be incorporated into the matrix by bombardment across a pressure gradient as described in EP 0 504 214. By incorporating the material into a matrix to form a filter material, the available active surface area is increased so as to aid efficiency. Furthermore, dispersion of the material in the contaminated fluid is reduced because it is held within the matrix. In some embodiments, webs of the filter matrix are loaded to a density of around 1kgm⁻²; a density of .925kgm⁻² has been found to be particularly effective in certain circumstances. In other embodiments, a density of around 0.5kgm⁻² has been found to be effective, particularly where the web of filter matrix has a thickness in the region of 3 or 4mm. Once the filter material has become saturated with pollutants, it is relatively simple to remove the filter and replace it with a new one.

The filter material can carry over twice its own weight in hydrocarbons and is therefore useful as an energy source in, for example, cement kilns. In some situations, used filter material may be macerated into a form which can be fluidised and injected into furnaces as a fuelstock.

The filter material may be cut into shapes, such as discs, suitable for installation in filtration apparatus. Particularly preferred is a filter column comprising a hollow core upon which is mounted an alternating stack of filter plates and discs of the filter material of the third aspect of the present invention, wherein the filter plates are adapted to allow passage of fluid from a circumferential region of the filter column to the hollow core by way of the discs of filter material.

Alternatively, filter cartridges may be constructed by wrapping layers of the filter material around a central core. For example, a cylindrical cartridge may be made by taking a perforated tubular core, wrapping this with layers of filter material, providing a protective outer layer which allows passage of fluid into or out of the cartridge, and securing the whole with a pair of end caps. Fluid may be passed through the filter material in the cartridge either from the central core to the outside or from the outside to the central core.

One or more such filter cartridges may be advantageously installed in a filter pod comprising a casing internally divided into two chambers by a carrier which supports at least one filter cartridge, the carrier and the at least one cartridge being arranged so that fluid can only pass from one chamber to the other by passing through both the hollow tubular core and the filter material of the at least one cartridge.

According to the present invention, there is provided a method of cleaning a fluid by contacting the fluid with the described fiter a material

Fluids which may be cleaned by this method include gases such as air, and liquids such as water.

For a better understanding of the present invention and to show how it may be carried into effect, reference shall now be made, by way of example, to the accompanying drawings, in which:
FIGURE 1 is an exploded view of a filter column incorporating the filter material of the present invention;
FIGURE 2 shows a detail of a filter plate from Figure 1;
FIGURE 3 shows a test circuit including a filter column similar to that of Figure 1;
FIGURE 4 shows a filter cartridge incorporating the filter material of the present invention;
FIGURE 5 shows a pod incorporating an array of the filter cartridges of Figure 4;
FIGURE 6 is a section through the pod of Figure 5;
FIGURE 7 shows a filter skid incorporating two of the pods of Figures 5 and 6;
FIGURE 8 shows a filter skid incorporating eight of the pods of Figures 5 and 6; and
FIGURE 9 is a graph showing the trends of flow/contamination data plotted against intervention periods for an eight-pod filter skid.

### Initial small-scale trials (Background):

There will firstly be described the results of small-scale laboratory analysis of a material according to the first aspect of the present invention. The differential pressure across columns of the material made from different types of cellulose was measured to gauge permeability and porosity characteristics of various substrates. The chosen grade showed no increase in differential pressure after 40 days flow. A particularly suitable grade of wood chip was found to be chips of a soft wood with a 30mm mean particle size.

Laboratory scale hydrocarbon filtration tests confirmed the oil-removing properties of the material. Two examples of the tests used follow:

### Example 1 (Background): Dissolved hydrocarbons removed via column packed with 12g of material

575ml of Inde K condensate was added to 10 litres of artificial formation water (Brent recipe) and vigorously stirred using a homogeniser. Separate litre samples were then drained off, 100ml of each being retained for triple peak analysis to measure the dissolved hydrocarbon content before filtration, and the remainder being added to a litre separation funnel mounted above the column. Triple peak analysis was carried cut on the filtered water to provide before and after figures. Results are shown in table 1:

**Table 1**

| Sample Litre | % Dissolved Hydrocarbons Removed |
|---|---|
| 1st | 86 |
| 2nd | 72 |
| 3rd | 83 |
| 4th | 67 |
| 5th | 82 |
| 6th | 59 |
| 7th | 75 |
| 8th | 75 |

### Example 2 (Background): Treatment of dry salt contaminated with hydrocarbons from a desalination plant

Batches of salt were rehydrated by adding 0.3kg of salt to 1 litre of pure water and passed through 12g of material at the rate of 1 litre/minute. The results are shown in tables 2 and 3.

**Table 2**

| Hydrocarbons/ppm | | |
|---|---|---|
| | Before | After |
| | | |
| Sample 1 | 2826 | 2 |
| Sample 2 | 4481 | 3 |

**Table 3**

| Hydrocarbons/ppm | | | | |
|---|---|---|---|---|
| | Before | | After | |
| | Disp. | Diss. | Disp. | Diss. |
| Sample 3 | 1110 | 18 | 1 | 0 |
| Sample 4 | 636 | 13 | 1 | 0 |

This small-scale analysis served to identify the physical nature of the substrate that retained permeability over long periods, absorbed high levels of hydrocarbons and was 100% incinerable. Accordingly, larger, yard scale trials could now commence:

### Example 3 (Background):

Real produced water from Sean Papa platform was supplied and batches of 1000 litres were filtered through 0.5kg of material at 10 litres/minute. Samples were taken before each batch and samples of filtered water taken every 10 minutes. Typical results are set out in tables 4 and 5.

**Table 4**

| Sample | Hydrocarbons/ppm | | |
|---|---|---|---|
| | Dissolved | Total | % Reduction |
| Pre filter B | 1870 | 26723 | |
| Filtrate B1 | 20 | 338 | 98 |
| Filtrate B2 | 15 | 453 | 98 |
| Filtrate B3 | 11 | 432 | 99 |
| Filtrate B4 | 10 | 381 | 99 |
| Filtrate B5 | 7 | 367 | 99 |
| Filtrate B6 | 8 | 374 | 99 |
| Filtrate B7 | 6 | 354 | 99 |
| Filtrate B8 | 2 | 341 | 99 |
| Filtrate B9 | 6 | 432 | 98 |
| Filtrate B10 | 1 | 314 | 99 |

**Table 5**

| Sample | Hydrocarbons/ppm | | |
|---|---|---|---|
| | Dissolved | Total | % Reduction |
| Pre filter D | 211 | 1409 | |
| Filtrate D1 | 9 | 28 | 98 |
| Filtrate D2 | 5 | 27 | 98 |
| Filtrate D3 | 4 | 25 | 99 |
| Filtrate D4 | 3 | 28 | 99 |
| Filtrate D5 | 4 | 27 | 99 |
| Filtrate D6 | 4 | 28 | 99 |
| Filtrate D7 | 2 | 27 | 99 |
| Filtrate D8 | 2 | 28 | 99 |
| Filtrate D9 | 2 | 27 | 98 |
| Filtrate D10 | 1 | 26 | 99 |

In both these trials, the water had not been passed through any prefilter coalescers or centrifuges, and therefore the total hydrocarbon levels (26723 - 1409ppm) were higher than expected. However, in a single pass through the filter, total hydrocarbon levels were reduced by an average >90%.

Specifically the dissolved fraction was reduced by an average 92%.

Typical suspended solids were 245ppm.

### Formation of filter sheets:

A granular formulation of a material is passed through a system that binds the loose product to, for example, a viscose or cotton gauze producing a 3mm thick mat that can be cut into shapes (typically discs) to fit existing filter hardware.

The process of forming such sheets increases the available surface area of the material thereby improving performance.

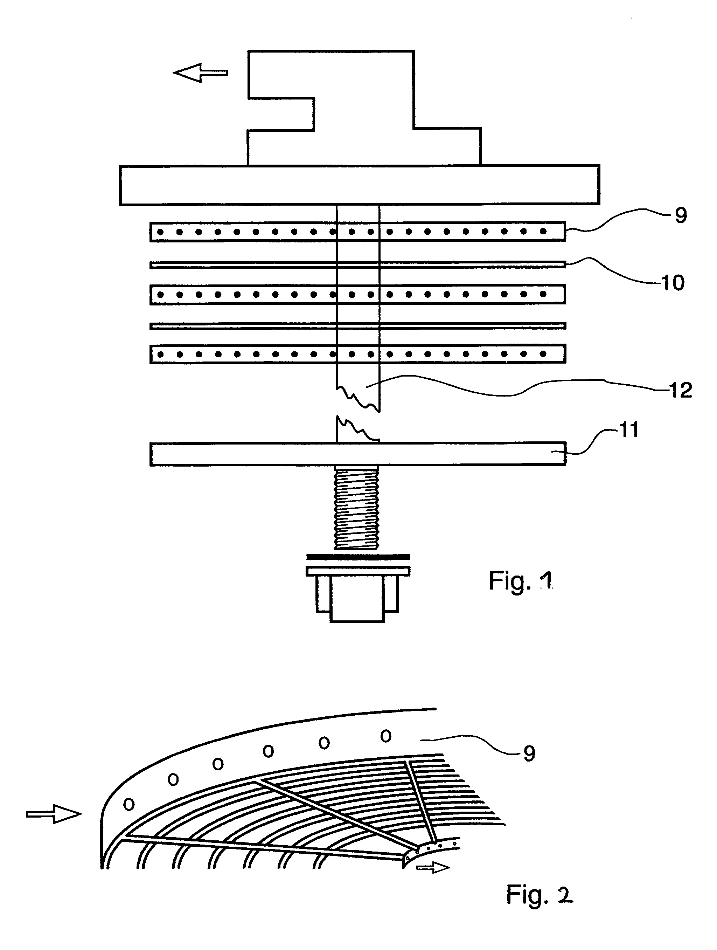

A prolonged programme of trials was undertaken to measure the performance of production grade discs in a commercially viable filtering system. The discs were installed in a filter column of the type shown in Figure 1, which comprises an alternating stack of filter plates (9) and discs (10) of filter material mounted on a hollow central core (12), the whole being compressed by an end plate (11) and placed in a suitable container (not shown). Figure 2 shows a filter plate (9) in more detail. Contaminated fluid is applied to the filter column such that it passes into the outside rim of each filter plate (9) and thence through an adjacent filter disc (10) before passing into the hollow central core (12) for extraction.

### Example 4:

2000 litres of synthetic produced water with 22ppm suspended solids (median size 2.5 - 19µm) was filtered through a disc filter column of the type shown in Figure 1 loaded with 16 discs (10) of filter material, samples being taken before and after filtering. Two tests were run using two different flow rates, series I at 48 litres/minute and series II at 10 litres/minute, the results being presented in tables 6 and 7, with table 8 showing the analysis of the condensate supplied.

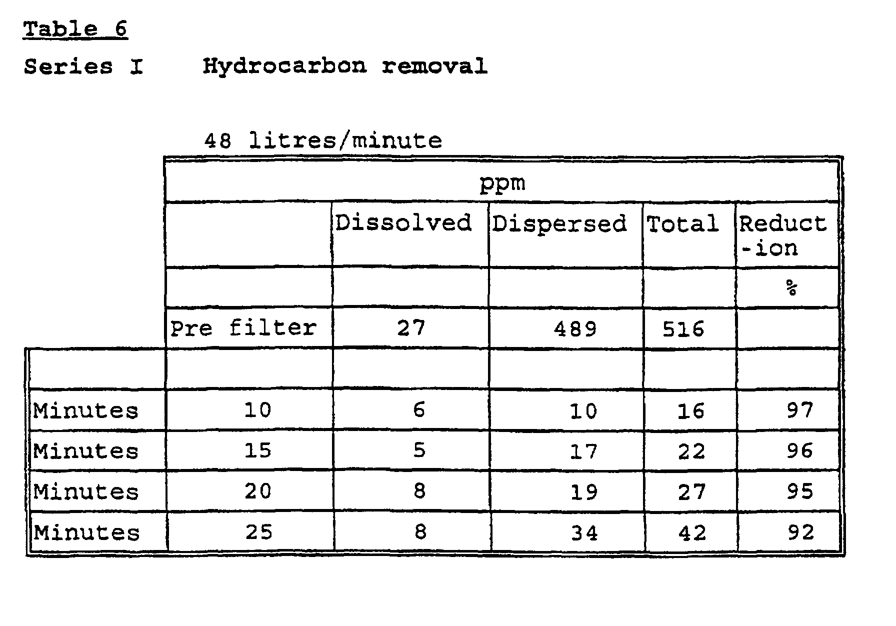

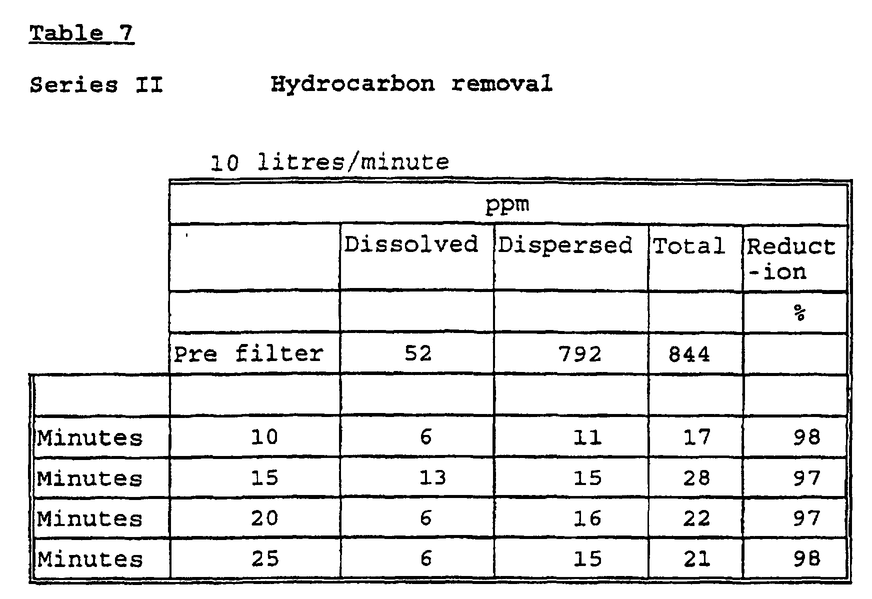

**Table 8:**

| **Condensate Composition** | |
|---|---|
| Component | %age Weight |
| C1 | <0.01 |
| C2 | 0.04 |
| C3 | 0.16 |
| i-C4 | 0.17 |
| n-C4 | 0.33 |
| neo-C5 | 0.04 |
| i-C5 | 0.37 |
| n-C5 | 0.45 |
| cyclo-C6 | 0.08 |
| C6 | 1.99 |
| Benzene | 1.62 |
| C7 | 3.55 |
| Toluene | 2.08 |
| C8 | 3.70 |
| Ethyl-benzene | 0.53 |
| Xylenes | 3.42 |
| C9 | 3.75 |
| Isopropylbenzene | 0.98 |
| 1,2,4 Trimethylbenzene | 1.90 |
| C10 | 6.65 |
| C11 | 9.74 |
| C12 | 8.90 |
| C13 | 9.52 |
| C14 | 8.96 |
| C15 | 8.10 |
| C16 | 5.23 |
| C17 | 4.80 |
| C18 | 3.54 |
| C19 | 2.48 |
| C20 | 1.78 |
| C21 | 1.32 |
| C22 | 0.98 |
| C23 | 0.69 |
| C24 | 0.60 |
| C25 | 0.37 |
| C26 | 0.34 |
| C27 | 0.32 |
| C28 | 0.26 |
| C29 | 0.19 |
| C30 | 0.07 |

In the following examples, the object was to establish the time taken for a given quantity of filter material discs to become saturated with hydrocarbons and to monitor continuously the hydrocarbon removal performance. These trials used fluorescing on-line hydrocarbon monitoring instruments.

### Example 5:

A 16 disc filter according to an embodiment of the present invention was used to treat 500ppm condensate in water. This was made up by homogenising the oil into a static water volume of 25 litres.

A laboratory fluorometer recorded:

| | |
|---|---|
| Run 1 | 93.5% removal at 5 litres/minute |
| Run 2 | 96% removal at 5 litres/minute |
| Run 3 | >87% removal at 5 litres/minute |

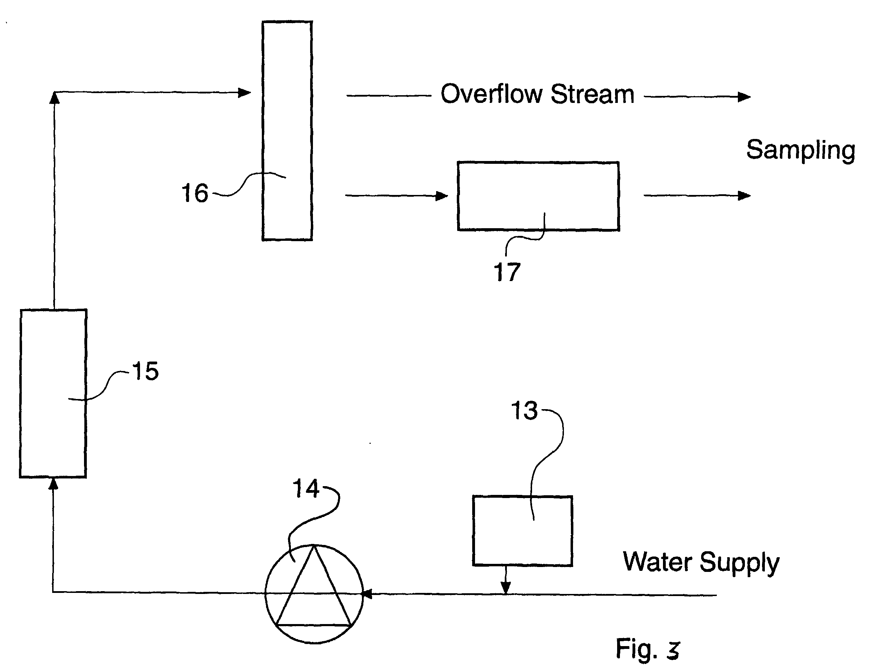

Changes were made to the means of dispersing the oil in water as shown in the circuit of Figure 3, which comprises a contaminant dosing pump (13), a seven-stage homogenising pump (14), a filter column (15) and a sampling reservoir (16), wherein the sampling reservoir (16) generates an overflow stream and a monitored stream, the latter stream passing through an on-line monitor (17) adapted to detect the presence of hydrocarbons by fluorescence.

Production grade filter discs were manufactured for future tests to a repeatable commercial production formulation with a weight of 1000gm⁻².

### Example 6:

In this example, the filter column and discs used in Example 5 were reused. The 16 disc filter was connected on-line with a process monitor calibrated to the exact condensate type. The hydrocarbon-polluted stream was pumped through the 16 disc filter after dynamic mixing.

Contaminants were injected into the influent water at a constant rate through a positive displacement pump directly into the throat of the homogenising pump. The outlet pressure was controlled to 98psi. Samples for on-line analysis were taken directly through the falling stream cell; samples for laboratory analyses were taken before and after filtration.

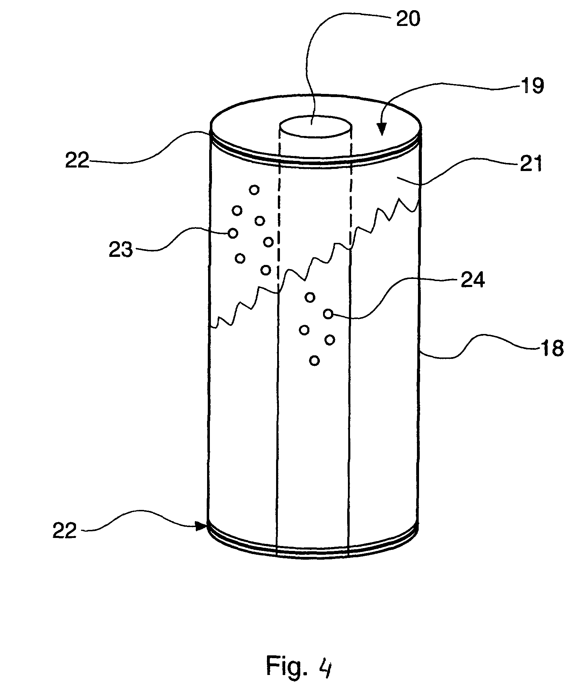

For the first continuous test the metering of condensate was calibrated to 500ppm in water with a mean droplet size of <10µm. Over the next two hours the filter continued to remove >90% of the condensate in water supplied at a rate of 8 litres/minute. The test circuit shown in Figure 4 proved to be a satisfactory system for future trials to test efficiency and filter capacity.

Production grade filter discs were used in the following tests:

### Example 7:

A nominal 300ppm condensate in water was passed at 4 litres/minute through a fresh filter column, the results being presented in table 9.

**Table 9**

| Elapsed Time (h) | Through Filter (l/min) | Monitored Inlet Conc./ppm | Measured Outlet Conc./ppm | % Removal |
|---|---|---|---|---|
| 0.00 | 4.02 | 312 | 16 | 95 |
| 2.50 | 4.05 | 305 | 18 | 94 |
| 3.75 | 4.05 | 310 | 20 | 94 |

### Example 8:

This was a repeat of the 300ppm test at 4 litres/minute but using new filter discs. This test ran for seven hours before showing signs of reaching saturation, the results being presented in table 10.

**Table 10**

| Elapsed Time (h) | Through Filter (l/min) | Monitored Inlet Conc./ppm | Measured Outlet Conc./ppm | % Removal |
|---|---|---|---|---|
| 0.00 | 4.02 | 310 | | |
| 1.00 | 4.02 | 307 | 6 | 98 |
| 1.50 | 4.00 | 295 | 6 | 98 |
| 2.25 | 3.97 | 312 | 8 | 97 |
| 3.25 | 4.00 | 312 | 10 | 97 |
| 4.25 | 4.00 | 308 | 12 | 96 |
| 5.25 | 4.05 | 310 | 13 | 96 |
| 7.00 | 3.98 | 312 | 18 | 94 |

### Example 9:

A nominal 500ppm condensate was passed through the above filter stack at the same volumetric flow rate so as to accelerate saturation, the results being presented in table 11. The filter column is showing signs of failure.

**Table 11**

| Elapsed Time (h) | Through Filter (l/min) | Monitored Inlet Conc./ppm | Measured Outlet Conc./ppm | % Removal |
|---|---|---|---|---|
| 7.00 | 4.05 | 498 | 18 | 96 |
| 7.25 | 4.05 | 498 | 18 | 96 |
| 8.00 | 4.03 | 496 | 35 | 93 |
| 8.25 | 4.03 | 498 | 88 | 82 |

### Example 10:

A nominal 500ppm condensate at 6 litres/minute was passed through the filter stack, the results being presented in table 12.

**Table 12**

| Elapsed Time (h) | Through Filter (l/min) | Monitored Inlet Conc./ppm | Measured Outlet Conc./ppm | % Removal |
|---|---|---|---|---|
| 0.00 | 6.51 | 515 | | |
| 0.50 | 6.32 | 515 | 11 | 98 |
| 1.00 | 6.42 | 515 | 14 | 97 |
| 2.00 | 6.35 | 513 | 14 | 97 |
| 3.00 | 6.42 | 516 | 22 | 96 |
| 3.50 | 6.46 | 514 | 26 | 95 |
| 4.50 | 6.42 | 514 | 46 | 91 |
| 5.67 | 6.42 | 513 | 62 | 87 |

### Example 11: Glycol removal

A larger filter housing using 18" filter discs was connected to the test rig shown in Figure 1. Glycol contaminated with hydrocarbons was supplied, this mixture was injected to the total stream of 14 litres/minute.

This level of contamination is beyond the calibration range of the standard on-line monitor, but it was possible to use the 4-20mA output to monitor changes in the inlet flow to the filter.

Hand samples were taken for analysis before and after filtering. The results are shown in table 13.

Throughout the test the filters were operating at 17psi. The filter elements were on-line for 150 minutes.

**Table 13**

| | ppm | | % |
|---|---|---|---|
| | Prefilter | Post filter | Reduction |
| Glycol MEG | 4520 | 797 | 82 |
| Glycol MEG | 4566 | 831 | 82 |
| Dispersed hydrocarbons | 95 | 0 | 100 |
| Dissolved hydrocarbons | 7 | 0 | 100 |

### Example 12: Metals removal

In this example, water with the following levels of metals was used:

| | |
|---|---|
| Nickel | 1.75ppm |
| Copper | 0.50ppm |
| Zinc | 0.40ppm |
| Lead | 0.30ppm |

and the following was added to the water:

| | |
|---|---|
| Condensate | 0.5ppm |
| Leman silt | 50ppm |

Samples were taken before and after filtering, the results being shown in table 14. The increase in the metal content of the prefiltered water is ascribed to metals in the condensate and silt.

**Table 14**

| | ppm | | % |
|---|---|---|---|
| | Prefilter | Post filter | Reduction |
| Nickel | 1.77 | 0.52 | 71 |
| Copper | 0.62 | 0.14 | 71 |
| Zinc | 2.9 | 0.25 | 57 |
| Lead | 0.42 | <0.05 | 88 |

### Formation of filter cartridges:

As an alternative to the disc filter column described above, a pod including one or more filter cartridges may be employed. As shown in Figure 4, a cartridge (18) is formed by wrapping filter material (19) around a tubular core (20) and applying a protective outer layer (21) and end caps (22). The protective outer layer (21) and the core (20) are provided with perforations (23,24) so as to allow passage of filtrate, either from the outside of the cartridge (18) through the filter material (19) to the inside of the core (20) or *vice versa*.

A typical cartridge (18) has a diameter of 215mm, a length of 1300mm and an internal diameter of 50mm, and is provided with 10.98kg of tightly-wrapped sheet filter material with a density of 0.925kgm⁻².

### Example 13:

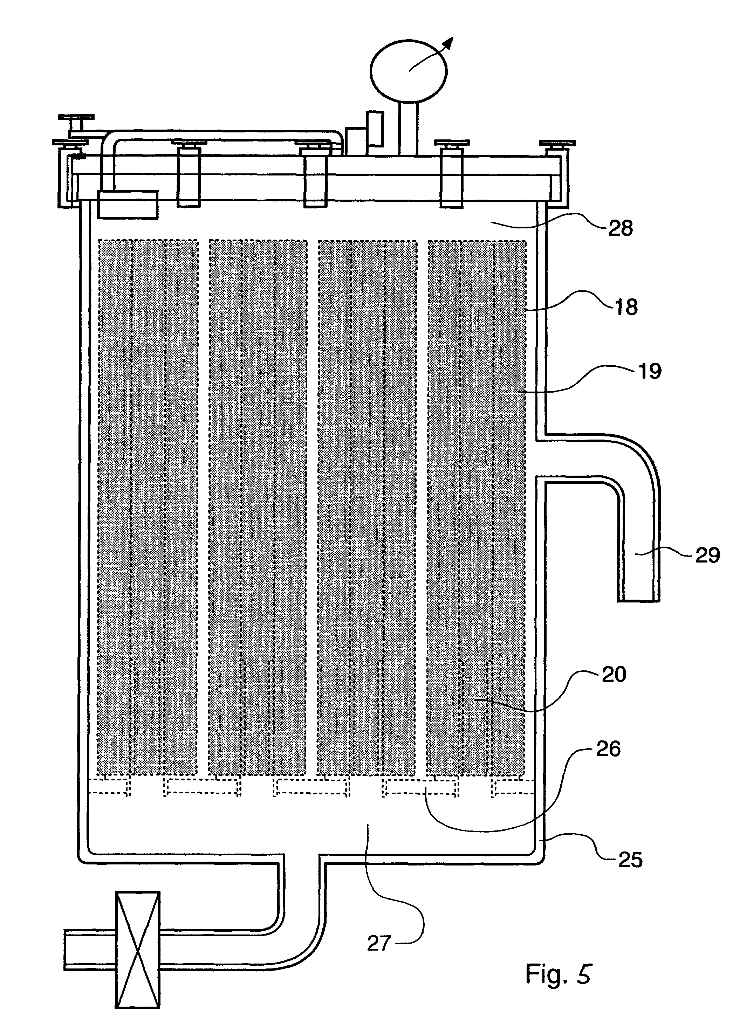

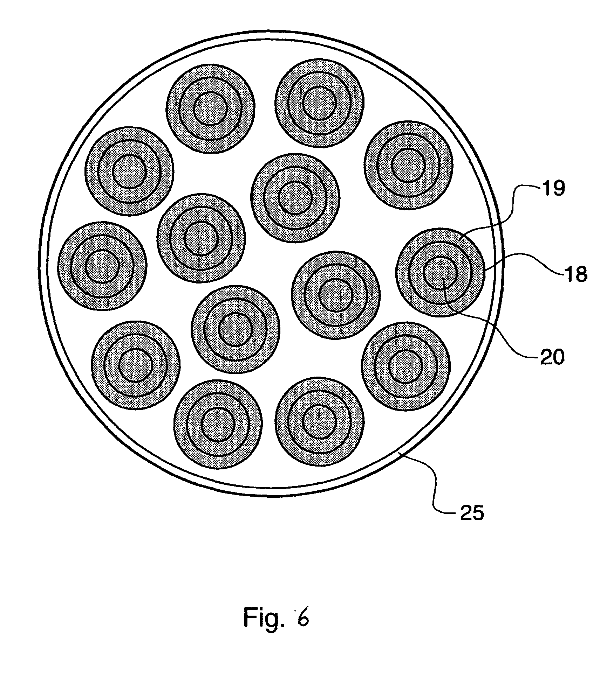

Figures 5 and 6 show a pod (25) in which an array of filter cartridges (18) is mounted on a carrier (26). The carrier (26) is adapted to allow filtrate ingressing from the bottom (27) of the pod (25) to pass only into the hollow cores (20) of the cartridges (18). The filtrate then passes through the filter material (19) and into the top (28) of the pod (25) (which is separated from the bottom (27) of the pod (25) by the carrier (26)), from where it exits the pod (25) by way of egress (29).

### Example 14:

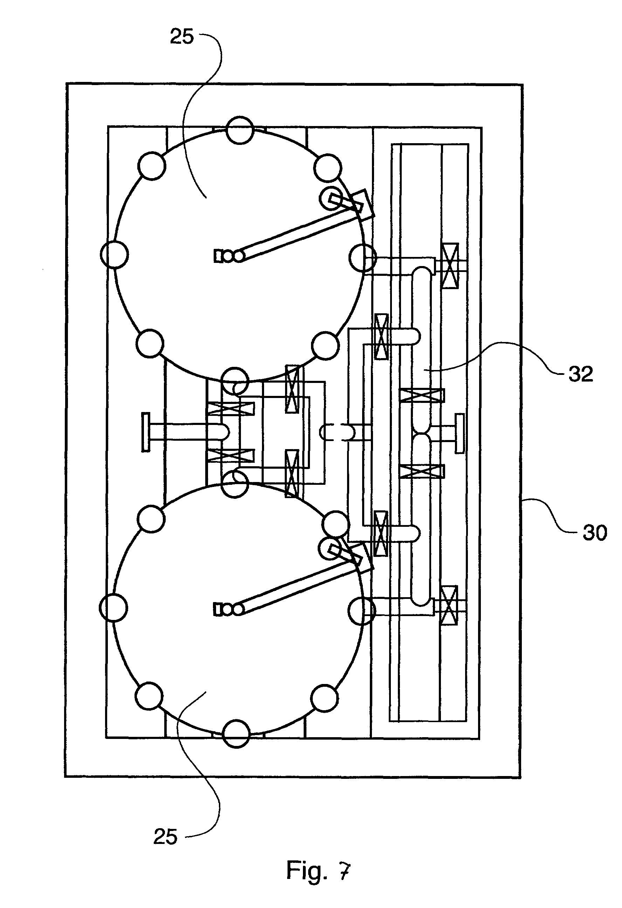

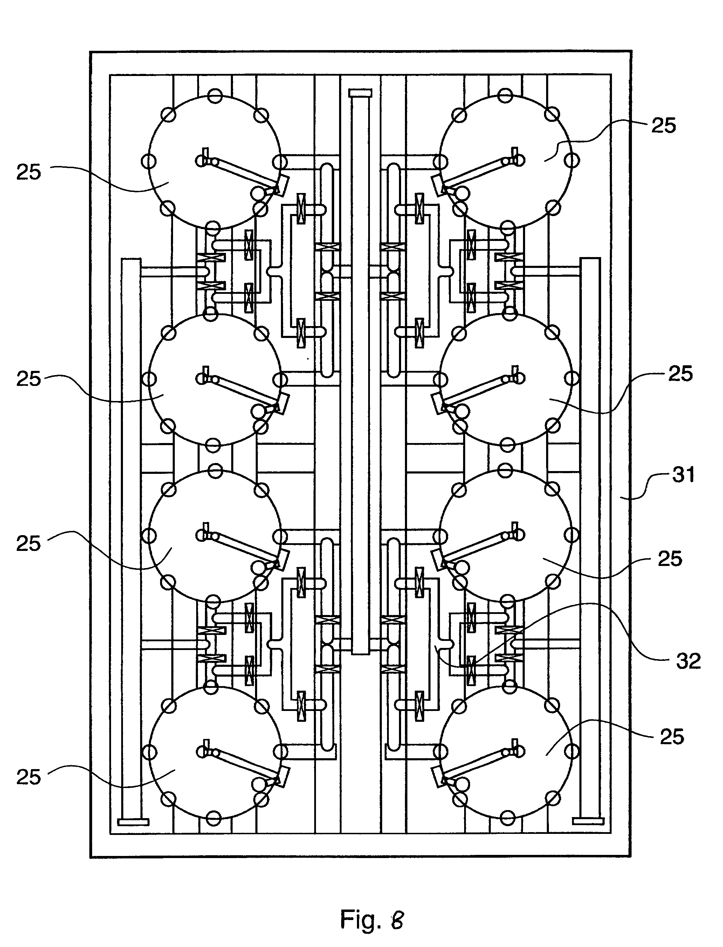

Figure 7 shows a filter skid (30) comprising two filter pods (25) and Figure 8 shows a filter skid (31) comprising eight filter pods (25). Figures 7 and 8 are not to scale. The pods (25) may be connected in series or in parallel in a number of configurations by way of alternative manifolding of the connecting pipework (32). A typical eight-pod skid (31) can accommodate flow rates of up to 120m³/hour at working pressures of up to 4 bar.

Table 15 shows the results achieved for an eight-pod skid (31), each pod (25) comprising ten filter cartridges (18) and operated according to the following specifications:
Weight of filter material per cartridge: 10.98kg
Weight of filter material per vessel: 109.8kg
Weight of filter material in skip: 878.4kg
Oil contamination: 500mg/litre
Oil adsorption: 90%
MEG contamination: 500mg/litre
MEG adsorption: 80%
Flow: 1656 litres/hour

**Table 15:**

| Flow litres/hour | Discharge | | | Retained contaminants | | Intervention |
|---|---|---|---|---|---|---|
| Through filter | mg/l | kg/day | kg/annum | mg/l | kg/day | Days |
| 1656 | 150 | 5.96 | 2176 | 850 | 33.79 | 52.00 |

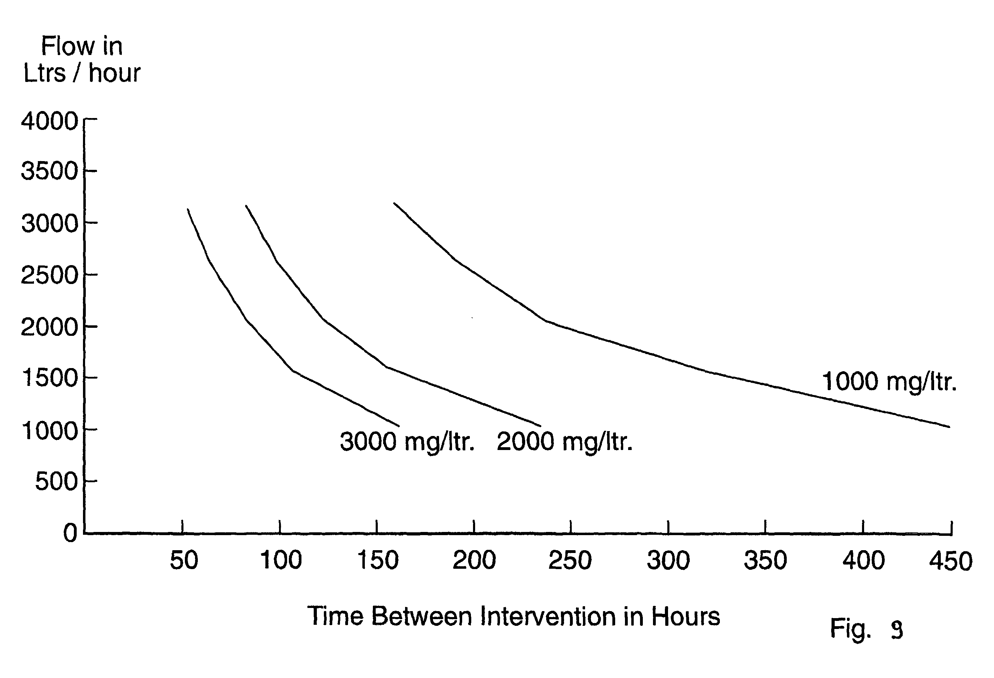

Figure 9 shows a plot of the trends of flow rate against contamination and intervention periods for a typical eight-pod filter skid employing the filter material of the present invention.

## Claims

1. A filter material comprising a sheet-like matrix in which is dispersed a granular formulation of a material comprising a base formed substantially of cellulose fibres onto which is adsorbed a composition comprising one or more aliphatic carboxylic acids having hydrocarbon chains consisting of 8 to 20 carbon atoms.

2. A filter material as claimed in claim 1, wherein the one or more aliphatic carboxylic acids have hydrocarbon chains consisting of 10 to 18 carbon atoms.

3. A filter material as claimed in claim 1 or 2, wherein the one or more carboxylic acids are selected from the group comprising stearic acid and palmitic acid.

4. A filter material as claimed in claim 1, 2 or 3, wherein the matrix comprises a non-woven fibrous material.

5. A filter material as claimed in claim 1, 2 or 3, wherein the matrix comprises an open-cell foam material.

6. A filter material as claimed in claim 1, 2 or 3, wherein the matrix comprises a cotton or viscose gauze.

7. A filter column comprising a hollow core upon which is mounted an alternating stack of filter plates and discs of the filter material as claimed in any of claims 1 to 6, wherein the filter plates are adapted to allow passage of fluid from a circumferential region of the filter column to the hollow core by way of the discs of filter material.

8. A filter cartridge comprising a hollow core around which is wrapped one or more layers of a filter material as claimed in any one of claims 1 to 6.

9. A filter pod comprising a casing internally divided into two chambers by a carrier which supports at least one filter cartridge as claimed in claim 8, the carrier and the at least one cartridge being arranged so that fluid can only pass from one chamber to the other by passing through both the hollow tubular core and the filter material of the at least one cartridge.

10. A method of cleaning a fluid by contacting the fluid with a filter material according to any of claims 1 to 6.

11. A method according to claim 10, wherein the fluid is air.

12. A method according to claim 10, wherein the fluid is water.

## Patentansprüche

1. Ein Filtermaterial, das eine blattähnliche Matrix umfaßt, in der eine granulierte Formulierung eines Materials dispergiert ist, das eine Basis umfaßt, die im wesentlichen aus Zellulosefasern gebildet ist, auf welche eine Zusammensetzung adsorbiert ist, die eine oder mehrere aliphatische Carbonsäuren umfaßt, die Kohlenwasserstoffketten aufweisen, die aus 8 bis 20 Kohlenstoffatomen bestehen.

2. Filtermaterial gemäß Anspruch 1, wobei die eine oder mehreren der aliphatischen Carbonsäuren Kohlenwasserstoffketten aufweisen, die aus 10 bis 18 Kohlenstoffatomen bestehen.

3. Filtermaterial gemäß Anspruch 1 oder 2, wobei die eine oder mehreren der aliphatischen Carbonsäuren aus der Gruppe, die Stearinsäure und Palmitinsäure umfaßt, ausgewählt ist/sind.

4. Filtermaterial gemäß Anspruch 1, 2 oder 3, wobei die Matrix ein nicht gewebtes Fasermaterial umfaßt.

5. Filtermaterial gemäß Anspruch 1, 2 oder 3, wobei die Matrix ein offenzelliges Schaumstoffmaterial umfaßt.

6. Filtermaterial gemäß Anspruch 1, 2 oder 3, wobei die Matrix eine Baumwoll- oder Viskosegaze umfaßt.

7. Eine Filtersäule, die einen hohlen Kern umfaßt, auf dem ein sich abwechselnder Stapel von Filterplatten und -scheiben aus dem Filtermaterial gemäß einem der Ansprüche 1 bis 6 montiert ist, wobei die Filterplatten ausgeführt sind, um den Durchlauf von Flüssigkeit von einem Umfangsbereich der Filtersäule zu dem hohlen Kern mittels der Scheiben aus dem Filtermaterial zu ermöglichen.

8. Eine Filterkartusche, die einen hohlen Kern umfaßt, um den eine oder mehrere Schichten eines Filtermaterials gemäß einem der Ansprüche 1 bis 6 gewickelt ist/sind.

9. Einen Filterstab, der ein Gehäuse umfaßt, das im Innern durch einen Träger, der mindestens eine Filterkartusche gemäß Anspruch 8 stützt, in zwei Kammern unterteilt ist, wobei der Träger und die mindestens eine Kartusche so angeordnet sind, daß Flüssigkeit nur dann von einer Kammer in die andere laufen kann, indem sie sowohl durch den hohlen röhrenförmigen Kern als auch das Filtermaterial der mindestens einen Kartusche läuft.

10. Ein Verfahren zur Reinigung einer Flüssigkeit, indem die Flüssigkeit mit einem Filtermaterial gemäß einem der Ansprüche 1 bis 6 in Kontakt gebracht wird.

11. Verfahren gemäß Anspruch 10, wobei die Flüssigkeit Luft ist.

12. Verfahren gemäß Anspruch 10, wobei die Flüssigkeit Wasser ist.

## Revendications

1. Un matériau filtrant comprenant une matrice semblable à une feuille dans laquelle est dispersée une formulation granulaire d'un matériau comprenant une base sensiblement formée de fibres de cellulose sur lesquelles est absorbée une composition comprenant un ou plusieurs acides carboxyliques aliphatiques ayant des chaînes d'hydrocarbures consistant en 8 à 20 atomes de carbone.

2. Un matériau filtrant tel que revendiqué dans la revendication 1, dans lequel ce ou ces acides carboxyliques aliphatiques ont des chaînes d'hydrocarbures consistant en 10 à 18 atomes de carbone.

3. Un matériau filtrant tel que revendiqué dans les revendications 1 ou 2, dans lequel ce ou ces acides carboxyliques sont choisis dans le groupe comprenant l'acide stéarique et l'acide palmitique.

4. Un matériau filtrant tel que revendiqué dans les revendications 1, 2 ou 3, dans lequel la matrice comprend un matériau fibreux non tissé.

5. Un matériau filtrant tel que revendiqué dans les revendications 1, 2 ou 3, dans lequel la matrice comprend un matériau en mousse à alvéoles ouvertes.

6. Un matériau filtrant tel que revendiqué dans les revendications 1, 2 ou 3, dans lequel la matrice comprend une gaze de coton ou de viscose.

7. Une colonne filtrante comprenant un centre creux sur lequel est monté un empilage alterné de plaques et de disques filtrants du matériau filtrant tel que revendiqué dans n'importe lesquelles des revendications 1 à 6, dans lequel les plaques filtrantes sont adaptées pour permettre le passage de fluide d'une région circonférentielle de la colonne filtrante au centre creux au moyen des disques de matériau filtrant.

8. Une cartouche filtrante comprenant un centre creux autour duquel sont enroulées une ou plusieurs couches d'un matériau filtrant tel que revendiqué dans n'importe laquelle des revendications 1 à 6.

9. Une cosse filtrante comprenant un tubage divisé de façon interne en deux chambres par un support qui soutient au moins une cartouche filtrante tel que revendiqué dans la revendication 8, le support et cette cartouche au moins étant agencés de sorte que du fluide puisse uniquement passer d'une chambre à l'autre en passant à la fois au travers du centre tubulaire creux et du matériau filtrant de cette cartouche au moins.

10. Une méthode de nettoyage d'un fluide consistant à mettre en contact le fluide avec un matériau filtrant selon n'importe lesquelles des revendications 1 à 6.

11. Une méthode selon la revendication 10, dans laquelle le fluide est de l'air.

12. Une méthode selon la revendication 10, dans laquelle le fluide est de l'eau.
